# FASCICULE DE BREVET EUROPEEN

(11) **EP 1 472 853 B1**
(45) Date de publication et mention de la délivrance du brevet: **17.09.2008**
(21) Numéro de dépôt: 03717363.0
(22) Date de dépôt: 31.01.2003
(51) Int. Cl.: H04M 1/247

(54) **APPAREIL DE TELECOMMUNICATION MOBILE AVEC INTERFACE UTILISATEUR ANTHROPOMORPHE**
MOBILES TELEKOMMUNIKATIONSGERÄT MIT ANTHROPOMORPHISCHER BENUTZERSCHNITTSTELLE
MOBILE TELECOMMUNICATION APPARATUS WITH ANTHROPOMORPHIC USER INTERFACE

(30) Priorité: 08.02.2002 FR 0201565
(43) Date de publication de la demande: 03.11.2004
(73) Titulaire: FRANCE TELECOM, 75015 Paris (FR)
(72) Inventeur: VACQUIE, Luc, F-31380 Saint Jean l'Herm (FR)
(74) Mandataire: Loisel, Bertrand
(86) Numéro de dépôt international: PCT/FR2003/000304
(87) Numéro de publication internationale: WO 2003/067859

(56) Documents cités:
- EP-A- 1 028 570
- EP-A- 1 104 151
- WO-A-01/61443
- WO-A-03/034700
- US-A1- 2001 056 364

## Description

Le domaine de l'invention est celui des appareils de télécommunications mobiles. On connaît de nombreux types d'appareils de télécommunications mobiles tels que les téléphones mobiles, les organisateur personnels dotés de moyens, de communications (PDA), les micro-ordinateurs portables dotés d'un modem qu'il est possible de brancher sur un téléphone mobile.

Plus particulièrement le domaine de l'invention est celui de la commande des appareils de télécommunications.

Dans l'état actuel de la technique, on connaît des dispositifs logiciels permettant de régler et de faire fonctionner un téléphone mobile par exemple de type GSM. De tels dispositifs mettent en oeuvre un système d'exploitation du téléphone mobile qui utilise sur une interface homme machine, des menus plus ou moins graphiques et des formulaires de saisie reposant sur un tangage textuel tel que le français, l'anglais on toute autre langue.

Un clavier, des dispositifs de pointage, des boutons d'accès rapide complètent cette interface et permettent de faire fonctionner et de régler le téléphone mobile. De tels dispositifs se retrouvent sur un organisateur personnel ou un micro-ordinateur portable. Il existe des interfaces de réglage permettant de régler une valeur analogique comme le volume de la sonnerie en modifiant à écran la représentation d'une cloche (symbole de sonnerie). Une cloche de taille importante représente un volume de sonnerie important. Une cloche de taille moindre représente un volume de sonnerie moindre.

Cependant, de tels menus comprennent généralement une part non négligeable de texte pour décrire des fonctions à réaliser telle que l'accès à un répertoire, la modification du volume du son, le renvoi indiqué en toutes lettres, etc. Les populations analphabètes ou ne comprenant aucune des langues proposées par le téléphone mobile, peuvent éprouver des difficultés à utiliser avec efficacité de tels dispositifs.

EP-A-1028570 décrit un terminal de télécommunication sans fil et un procédé pour afficher des pictogrammes sur un écran d'un tel terminal, des fonctions ou articles de menus pouvant y être affichés sous forme de pictogrammes. US 20011056364 A1 décrit un procédé d'interaction avec un système électronique grand public avec affichage d'un personnage à apparences multiples en fonctions desquelles est commandé le système électronique.

Un premier objet de l'invention est de permettre l'utilisation et le réglage d'un appareil de télécommunications mobile tel qu'un téléphone mobile, en fournissant une interface entièrement graphique ne présentant pas de menu sous forme de texte, mais sous forme anthropomorphe ou zoomorphe. Un deuxième objet de l'invention est de rendre l'interface d'un téléphone mobile ou celle d'un organisateur personnel, plus simple et intuitive d'utilisation.

Un troisième objet de l'invention est de constituer un système simple d'accès y compris pour des populations analphabètes ou parlant des langues peu répandues.

L'invention concerne un appareil de télécommunications mobile comprenant un microphone, un haut-parleur, un émetteur récepteur, un circuit de commandes avec une mémoire et une interface de commandes avec un afficheur. L'appareil de télécommunications mobile est remarquable en ce qu'il comprend en mémoire une collection dite de personnages contenant des paramètres de commande et de visualisation, associés à chaque personnage, un éditeur de personnages agencé pour accéder en lecture écriture aux paramètres de ladite collection de personnages, un système d'exploitation agencé pour être exécuté dès le démarrage par le circuit de commandes de façon à piloter l'éditeur de personnages pour visualiser un personnage dit principal sur l'afficheur.

Particulièrement, le système d'exploitation est agencé pour recevoir de l'éditeur de personnages, les paramètres de commande adaptés pour piloter le haut-parleur, l'émetteur récepteur et ou l'afficheur.

Avantageusement, le système d'exploitation est agencé pour transmettre à l'éditeur de personnage, des ordres reçus de l'interface de commande de façon à modifier au moins un paramètre de commande ou de visualisation de ladite collection de personnages.

Avantageusement encore, un premier paramètre de visualisation concerne un état de brillance ou de couleur d'une partie de personnage, au moins un deuxième paramètre de visualisation concerne une forme de la même partie de personnage, de valeur modifiable par l'éditeur de personnage selon l'état concerné par le premier paramètre de visualisation.

Particulièrement, au moins un premier paramètre de commande est de valeur fonction de la valeur du deuxième paramètre de visualisation.

Plus particulièrement, l'éditeur de personnage est agencé pour passer d'un premier sous-ensemble de paramètres de visualisation concernant une première partie de personnage à un deuxième sous-ensemble de paramètres de visualisation concernant une deuxième partie de personnage sur ordre reçu de l'interface de commande.

L'appareil de télécommunication mobile est notamment performant en termes d'ergonomie, avec un éditeur de personnage agencé pour passer d'un premier ensemble de paramètres de visualisation concernant un premier personnage à un deuxième ensemble de paramètres de visualisation concernant un deuxième personnage sur ordre reçu de l'interface de commande.

L'appareil de télécommunication mobile est notamment performant aussi en termes d'ergonomie, avec un éditeur de personnage agencé pour passer d'un premier ensemble de paramètres de visualisation concernant un premier personnage différent du dit personnage principal à un deuxième ensemble de paramètres de visualisation concernant ledit personnage principal à l'échéance d'une temporisation armée par un ordre reçu de l'interface de commande.

Avantageusement, le système d'exploitation est agencé pour transmettre à l'éditeur de personnage, un événement reçus de l'émetteur-récepteur et l'éditeur de personnage est agencé pour se positionner sur un premier ensemble de paramètres de visualisation concernant un personnage représentatif d'un contexte associé au dit événement.

L'appareil de télécommunication mobile est amélioré lorsqu'il comprend en mémoire, un système de synthèse vocale commandé par l'éditeur de personnage pour émettre sur le haut-parleur, une annonce vocale qui indique le personnage ou la partie de personnage concernée par l'ensemble ou respectivement le sous-ensemble sur lequel se positionne l'éditeur de personnage.

L'appareil de télécommunication mobile est amélioré aussi lorsqu'il comprend en mémoire, un système de reconnaissance vocale agencé pour positionner l'éditeur de personnage sur l'ensemble ou le sous-ensemble qui concerne le personnage ou respectivement la partie de personnage qui correspond à un appel de nom reçu du microphone par ledit système de reconnaissance vocale.

L'invention sera mieux comprise à l'aide de l'exemple de réalisation dont la description suit en référence aux dessins annexés dans lesquels
- la figure 1 montre un appareil de télécommunications mobile tel qu'un téléphone mobile ;
- la figure 2 montre un schéma d'appareil de télécommunications mobile conforme à l'invention ;
- la figure 3 montre un exemple de structure de données pour réaliser une collection de personnages ;
- la figure 4 montre des étapes de procédés conformes à l'invention ;
- la figure 5 montre des exemples de personnages d'une collection de personnages possibles.

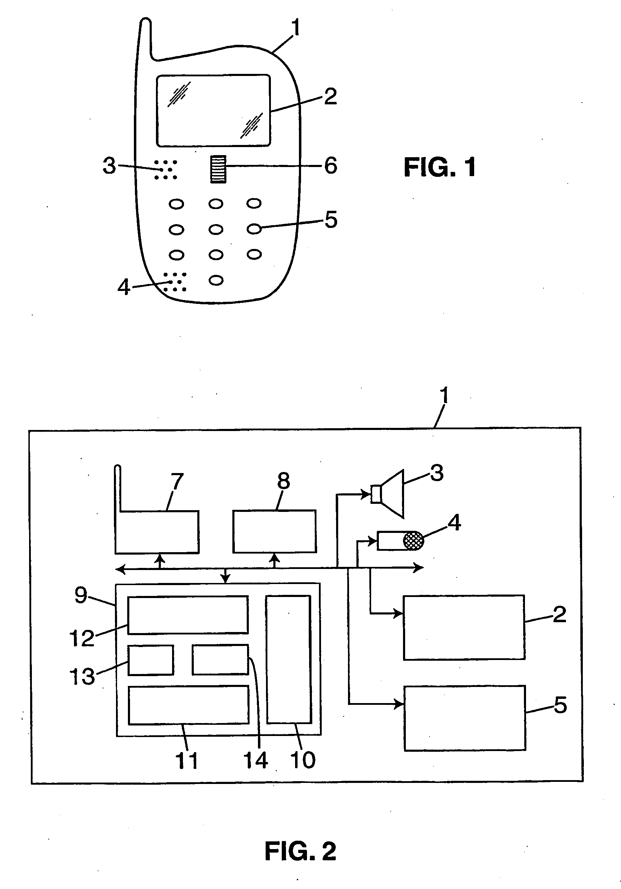

En référence à la figure 1, un appareil de télécommunications mobile est un téléphone mobile 1. Le téléphone mobile 1 comprend un afficheur 2 tel qu'un écran graphique. Une interface de commandes comprend un clavier alphanumérique 5 ou une molette 6. Le téléphone mobile 1 comprend aussi un haut-parleur 3 et un microphone 4. Le haut-parleur 3 sert à émettre de la voix ou une sonnerie.

En référence à la figure 2, le téléphone mobile 1 comprend un émetteur récepteur 7, un circuit de commandes 8, une mémoire 9. En exécutant un système d'exploitation 12 compris dans la mémoire 9, le circuit de commandes 8 fait fonctionner l'émetteur récepteur 7, le haut-parleur 3, le microphone 4, l'afficheur 2, l'interface de commandes 5 et, avantageusement un éditeur de personnages 11 compris dans la mémoire 9. Dans la mémoire 9, une collection de personnages 10 contient des paramètres de commande et de visualisation, associés à différents personnages. L'éditeur de personnages 11 est agencé pour accéder en lecture et en écriture aux paramètres de la collection de personnages 10. Le système d'exploitation 12 est agencé pour être exécuté dés le démarrage du téléphone mobile 1. Plus particulièrement, le système d'exploitation est agencé pour être exécuté par le circuit de commande 8 de façon à piloter l'éditeur de personnages 11 pour visualiser un personnage dit principal sur l'afficheur 2.

Selon des variantes possibles de réalisation, la mémoire 9 contient aussi d'autres logiciels tel qu'un système de synthèse vocale 13 et/ou un système de reconnaissance vocale 14.

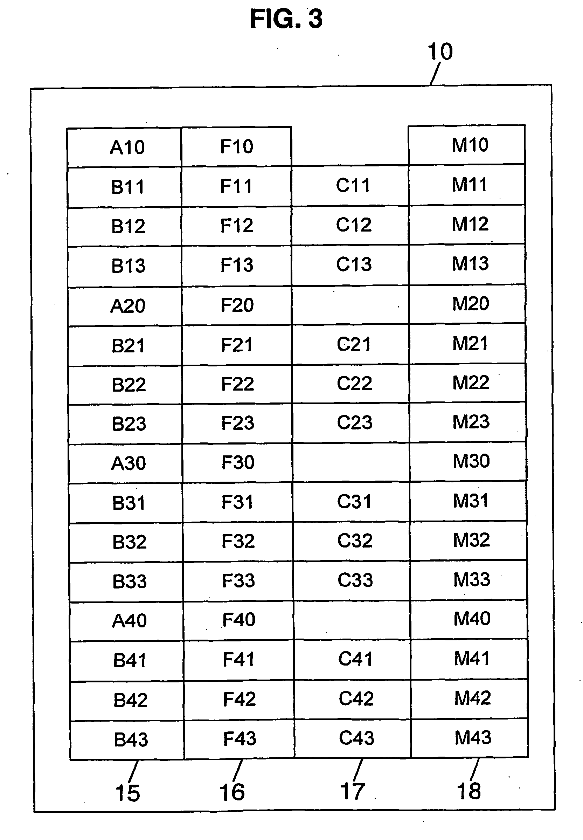

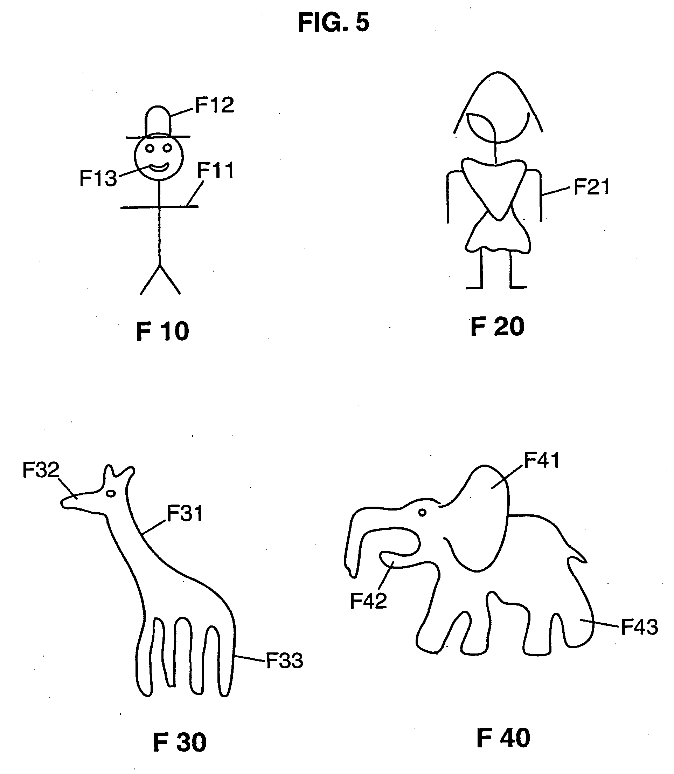

En référence à la figure 3, la collection de personnages 10 est représentée sous forme d'une structure de données résidente en mémoire 9. On y distingue une colonne 15 de premiers paramètres de visualisation, une colonne 16 de deuxièmes paramètres de visualisation, une colonne 17 de paramètres de commande et éventuellement une colonne 18 de paramètres d'annonce vocale. Dans les colonnes 15 et 16 sont mémorisés des ensembles de paramètres de visualisation, chacun pour un personnage tel que représenté à titre d'exemple non limitatif en figure 5.

Par exemple, un ensemble de paramètres F10 constitue des données graphiques pour décrire une structure de personnage humain masculin tels que représenté en figure 5. Un sous ensemble F11 constitue des données graphiques pour décrire une partie de ce personnage tel qu'un bras sur la figure 5. Un sous ensemble de paramètres F12 constitue des données graphiques pour décrire une autre partie de personnage tel qu'un chapeau sur la figure 5. Un autre sous ensemble de paramètres F13 constitue des données graphiques pour décrire une autre partie de personnage encore telle qu'une bouche sur la figure 5. Au sous ensemble de paramètres F11, F12, F13, sont associés respectivement des paramètres B11, B12, B13. Les paramètres B11, B12, B13, concernent un état de brillance ou de couleur de la partie de personnage respectivement associée. A chaque paramètre de forme F11, F12, F13 est associé respectivement un paramètre de commande C11, C12, C13. A titre d'exemple purement illustratif et non limitatif, le paramètre C11 correspond par exemple à une commande d'appel téléphonique, le paramètre C12 correspond à une commande de modification ou d'enregistrement de numéro de téléphone, le paramètre C13 correspond à une prise d'appel entrant.

Par exemple, un ensemble de paramètres F20 constitue des données graphiques pour décrire une structure de personnage humain féminin tels que représenté en figure 5. Un sous-ensemble F21 constitué des données graphiques pour décrire une partie de ce personnage tel qu'un bras sur la figure 5. Un sous-ensemble de paramètres F22 constitue des données graphiques pour décrire une autre partie de personnage tel qu'un chapeau sur la figure 5. Un autre sous-ensemble de paramètres F23 constitue des données graphiques pour décrire une autre partie de personnage encore telle qu'une bouche sur la figure 5. Au sous-ensemble de paramètres F21, F22, F23, sont associés respectivement des paramètres B21, B22, B23. Les paramètres B21, B22, B23, concernent un état de brillance ou de couleur de la partie de personnage respectivement associée. A chaque paramètre de forme F21, F22, F23 est associé respectivement un paramètre de commande C21, C22, C23. A titre d'exemple purement illustratif et non limitatif, le paramètre C21 correspond par exemple à une commande d'appel téléphonique, le paramètre C22 correspond à une commande de modification ou d'enregistrement de numéro de téléphone, le paramètre C23 correspond à une prise d'appel entrant.

Par exemple, un ensemble de paramètres F30 constitue des données graphiques pour décrire une structure de personnage animal tel que représenté en figure 5 par une girafe. Un sous-ensemble F31 constitue des données graphiques pour décrire une partie de ce personnage tel qu'un cou sur la figure 5, avec à titre d'exemple purement illustratif, des valeurs continues d'allongement du cou. Un sous-ensemble de paramètres F32 constitue des données graphiques pour décrire une autre partie de personnage tel qu'une bouche sur la figure 5, avec à titre d'exemple purement illustratif, des valeurs "bouche ouverte", "bouche fermée". Un autre sous-ensemble de paramètres F33 constitue des données graphiques pour décrire une autre partie de personnage encore telle que des pattes sur la figure 5. Au sous-ensemble de paramètres F31, F32, F33, sont associés respectivement des paramètres B31, B32, B33. Les paramètres B31, B32, B33, concernent un état de brillance ou de couleur de la partie de personnage respectivement associée. A chaque paramètre de forme F31, F32, F33 est associé respectivement un paramètre de commande C31, C32, C33. A titre d'exemple purement illustratif et non limitatif, le paramètre C31 correspond par exemple à un réglage de volume sonore du haut-parleur 3 en écoute de conversation téléphonique, le paramètre C32 correspond à une commande d'accès à un répertoire téléphonique par défilement de personnages de type décrits par les paramètres F10, F11, le paramètre C33 correspond à une commande d'accès à d'autres menus de réglage, à chacun desquels correspond un personnage animal. La girafe constitue par exemple un personnage dit principal affichable sur l'écran 2 dès la mise en fonctionnement du téléphone mobile.

Par exemple, un ensemble de paramètres F40 constitue des données graphiques pour décrire une structure de personnage animal tel que représenté en figure 5 par un éléphant. Un sous-ensemble F41 constitue des données graphiques pour décrire une partie de ce personnage tel qu'une oreille sur la figure 5, avec à titre d'exemple purement illustratif, des valeurs continues de taille de l'oreille. Un sous-ensemble de paramètres F42 constitue des données graphiques pour décrire une autre partie de personnage tel qu'une bouche sur la figure 5, avec à titre d'exemple purement illustratif, des valeurs "bouche ouverte", "bouche fermée". Un autre sous-ensemble de paramètres F43 constitue des données graphiques pour décrire une autre partie de personnage encore telle que des pattes sur la figure 5. Au sous-ensemble de paramètres F41, F42, F43, sont associés respectivement des paramètres B41, B42, B43. Les paramètres B41, B42, B43, concernent un état de brillance ou de couleur de la partie de personnage respectivement associée. A chaque paramètre de forme F41, F42, F43 est associé respectivement un paramètre de commande C41, C42, C43. A titre d'exemple purement illustratif et non limitatif, le paramètre C41 correspond par exemple à un réglage de volume sonore du haut-parleur 3 pour émettre une sonnerie d'alarme, le paramètre C42 correspond à une commande de mise en mode silencieux d'alarme, le paramètre C43 correspond à une commande de mise en mode vibreur d'alarme. L'éléphant constitue par exemple un personnage auquel correspond un menu de réglage du téléphone mobile.

Selon un mode possible de réalisation, la colonne 18 contient un ensemble de paramètres M10, M20 pour énoncer un message vocal tel que le nom d'une personne correspondant au personnage associé respectivement au paramètre de forme F10, F20. Un sous-ensemble de paramètres M11, M21 est destiné à contenir un message vocal pour énoncer la partie de personnage correspondant respectivement au paramètre F11, F21. Par exemple, selon l'état du paramètre F11, F21, un message associé au paramètre M 11, M21 énonce bras levé ou bras baissé, ou plus explicitement le terme "appelé". Les paramètres M12, M22 associés aux paramètres de forme F12, F22, sont prévus pour énoncer un message de type "modifier numéro de téléphone" ou "enregistrer numéro de téléphone". Les paramètres M13, M23 associés aux paramètres F13, F23, sont prévus pour décrire un message sonore tel que "Monsieur Untel t'appelle" où Untel est le nom d'une personne associée au personnage référencé par les paramètres F10 à F13, respectivement d'une personne associée au personnage référencé par les paramètres F20 à F23.

Selon ce mode possible de réalisation, la colonne 18 contient un ensemble de paramètres M30, M40 pour énoncer un message vocal tel que le type de menu correspondant au personnage associé respectivement au paramètre de forme F30, F40. Un sous-ensemble de paramètres M31, M41 est destiné à contenir un message vocal pour énoncer la partie de personnage correspondant respectivement au paramètre F31, F41. Par exemple, selon l'état du paramètre F31, F41, un message associé au paramètre M31, M41 énonce "cou allongé" ou "plus grande oreille", ou plus explicitement le terme "réglage son". Les paramètres M32, M42 associés aux paramètres de forme F32, F42, sont prévus pour énoncer un message de type "appeler" ou "mode silencieux". Les paramètres M33, M43 associés aux paramètres F33, F43, sont prévus pour décrire un message sonore tel que "réglage téléphone", respectivement "mode vibreur".

Avantageusement, les paramètres de la collection de personnages 10, peuvent être téléchargés dans le téléphone mobile. par exemple, une série de personnages humains masculins ou féminins, chaque personnage étant associé à un numéro de téléphone, permettent à un utilisateur du téléphone mobile d'assimiler chaque personnage comme correspondant à une personne connue. Des personnages humains disponibles en mémoire, peuvent être prévus pour être associés à une personne lors d'un premier appel entrant sur le téléphone mobile.

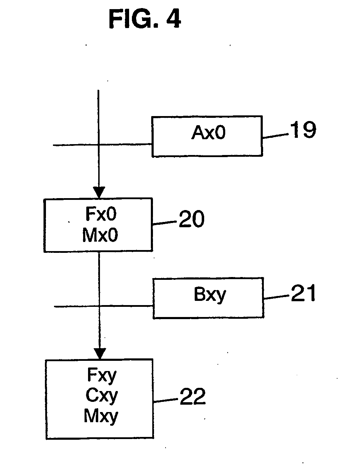

En référence à la figure 4 sont maintenant décrites des étapes de procédés exécutables par l'éditeur de personnages 11.

Dans une transition 19, l'éditeur de personnages 11 reçoit du système d'exploitation 12, une adresse A10, A20, A30, A40, pour se positionner sur les paramètres d'un personnage de la collection de personnages 10. L'adresse notée de façon générale Ax0 sur la figure 4, est générée à la suite d'un ordre reçu de l'interface de commande 5 constituée d'un clavier alphanumérique ou plus simplement de la molette 6, du système de synthèse vocale 13 ou à la suite d'un événement généré par exemple par l'émetteur récepteur 7.

Dans une étape 20, le système d'exploitation transmet au système d'exploitation 12, celui de l'ensemble de paramètres F10, F20, F30, F40 correspondant à un personnage à afficher sur l'afficheur 2. Selon un mode de réalisation possible, le ou les paramètres Mx0 associés, sont aussi transmis au système d'exploitation 12 pour émettre un message vocal sur le haut-parleur 3.

Une transition 21 est validée par une réception de paramètres notée de façon générale Bx0 de mise en surbrillance d'une partie de personnage. Cette mise en surbrillance ou modification de couleur d'une partie de personnage est commandée par la molette 6 ou par un message vocal reçu du micro 4.

La transition 21 active alors une étape 22. Dans l'étape 22, l'éditeur de personnages 11 transmet au système d'exploitation 12, le sous ensemble de paramètres Fxy correspondant à la partie de personnage mise en surbrillance. Selon un mode possible de réalisation, l'éditeur de personnages 11 transmet aussi au système d'exploitation les paramètres MXY pour décrire un message vocal à émettre sur le haut-parleur 3. Selon que la mise en surbrillance d'une partie de personnage correspond à un ordre de modification de cette partie de personnage ou à une commande à transmettre au système d'exploitation, l'éditeur de personnages 11 modifie le paramètre de visualisation Fxy correspondant ainsi que le paramètre de commande Cxy correspondant, ou transmet au système d'exploitation 12 le paramètre de commande Cxy correspondant de façon à piloter un organe du téléphone mobile.

Le système d'exploitation qui visent d'être décrit avec l'éditeur de personnages est intéressant pour tout type d'appareil dont on souhaite de permettre un réglage par une personne ne pouvant pas ou pouvant difficilement lire des messages en mode caractères. C'est le cas par exemple pour des montres. Une montre communicante portée au poignet peut par exemple constituer un appareil de télécommunication mobile en ayant tout ou partie des attributs d'un téléphone mobile à proprement parler.

## Revendications

1. Appareil de télécommunication mobile (1) comprenant un microphone (4), un haut-parleur (3), un émetteur-récepteur (7), un circuit de commande (8) avec une mémoire (9) et une interface de commande (5, 6) avec un afficheur (2), **caractérisé en ce qu'**il comprend en mémoire:
- une collection de personnages (10) contenant des données graphiques pour décrire une structure de personnage anthropomorphe,
- un éditeur de personnages (11) agencé pour accéder en lecture écriture aux paramètres de ladite collection de personnages et pour passer d'un premier ensemble de paramètres de visualisation concernant un premier personnage à un deuxième ensemble de paramètres de visualisation concernant un deuxième personnage sur ordre reçu de l'interface de commande (5,6);
- un système d'exploitation (12) agencé pour être exécuté dès le démarrage par le circuit de commande (8) de façon à piloter l'éditeur de personnages (11) pour visualiser un personnage dit principal sur l'afficheur (2).

2. Appareil de télécommunication mobile selon la revendication 1, caractère en ce que le système d'exploitation (12) est agencé pour recevoir de l'éditeur de personnages (11), les paramètres de commande adaptés pour piloter le haut-parleur (3), l'émetteur récepteur (7) et ou l'afficheur (2).

3. Appareil de télécommunication mobile selon l'une des revendications précédentes, **caractérisé en ce qu'**au moins un premier paramètre de visualisation concerne un état de brillance ou de couleur d'une partie de personnage, au moins un deuxième paramètre de visualisation concerne une forme de la même partie de personnage, de valeur modifiable par l'éditeur de personnage selon l'état concerné par le premier paramètre de visualisation.

4. Appareil de télécommunication mobile selon la revendication 3, **caractérisé en ce qu'**au moins un premier paramètre de commande est de valeur fonction de la valeur du deuxième paramètre de visualisation.

5. Appareil de télécommunication mobile selon la revendication 3, **caractérisé en ce que** l'éditeur de personnage (11) est agencé pour passer d'un premier sous-ensemble de paramètres de visualisation concernant une première partie de personnage à un deuxième sous-ensemble de paramètres de visualisation concernant une deuxième partie de personnage sur ordre reçu de l'interface de commande (5,6).

6. Appareil de télécommunication mobile selon la revendication 1, **caractérisé en ce que** l'éditeur de personnage (11) est agencé pour passer d'un premier ensemble de paramètres de visualisation concernant un premier personnage différent du dit personnage principal à un deuxième ensemble de paramètres de visualisation concernant ledit personnage principal à l'échéance d'une temporisation armée par un ordre reçu de l'interface de commande (5,6).

7. Appareil de télécommunication mobile selon la revendication 1 ou 2, **caractérisé en ce que** le système d'exploitation (12) est agencé pour transmettre à l'éditeur de personnage, un événement reçu de l'émetteur-récepteur (7) et **en ce que** l'éditeur de personnage (11) est agencé pour se positionner sur un premier ensemble de paramètres de visualisation concernant un personnage représentatif d'un contexte associé au dit événement

8. Appareil de télécommunication mobile selon l'une des revendications 5 à 7, **caractérisé en ce qu'**il comprend en mémoire, un système de synthèse vocale (13) commandé par l'éditeur de personnage (11) pour émettre sur le haut-parleur (3), une annonce vocale qui indique le personnage ou la partie de personnage concernée par l'ensemble ou respectivement le sous-ensemble sur lequel se positionne l'éditeur de personnage.

9. Appareil de télécommunication mobile selon l'une des revendications 5 à 7, **caractérisé en ce qu'**il comprend en mémoire, un système de reconnaissance vocale (14) agencé pour positionner l'éditeur de personnage (11) sur l'ensemble ou le sous-ensemble qui concerne le personnage ou respectivement la partie de personnage qui correspond à un appel de nom reçu du microphone (4) par ledit système de reconnaissance vocale (14).

## Claims

1. Mobile telecommunication apparatus (1) comprising a microphone (4), a loudspeaker (3), a transmitter/receiver (7), a control circuit (8) with a memory (9) and a control interface (5, 6) with a display (2), **characterized in that** it comprises in memory;
- a collection of personae (10) containing graphical data for describing an anthropomorphic persona structure,
- a personae editor (11) designed for read/write access to the parameters of the said collection of personae and to go from a first set of viewing parameters relating to a first persona to a second set of viewing parameters relating to a second persona upon an order received from the control interface (5, 6);
- an operating system (12) designed to be executed right from startup by the control circuit (8) in such a way as to drive the personae editor (11) so as to view a so-called main persona on the display (2).

2. Mobile telecommunication apparatus according to Claim 1, **characterized in that** the operating system (12) is designed to receive from the personae editor (11), the control parameters adapted to drive the loudspeaker (3), the transmitter/receiver (7) and/or the display (2).

3. Mobile telecommunication apparatus according to one of the preceding claims, **characterized in that** at least one first viewing parameter relates to a state of brightness or of color of a portion of persona, at least one second viewing parameter relates to a shape of the same portion of persona, and the value of which can be modified by the persona editor according to the state to which the first viewing parameter relates.

4. Mobile telecommunication apparatus according to Claim 3, **characterized in that** the value of at least one first control parameter is dependent on the value of the second viewing parameter.

5. Mobile telecommunication apparatus according to Claim 3, **characterized in that** the persona editor (11) is designed to go from a first subset of viewing parameters relating to a first portion of persona to a second subset of viewing parameters relating to a second portion of persona upon an order received from the control interface (5, 6) .

6. Mobile telecommunication apparatus according to Claim 1, **characterized in that** the persona editor (11) is designed to go from a first set of viewing parameters relating to a first persona different from the said main persona to a second set of viewing parameters relating to the said main persona upon the expiry of a timeout set by an order received from the control interface (5,6).

7. Mobile telecommunication apparatus according to Claim 1 or 2, **characterized in that** the operating system (12) is designed to send the persona editor an event received from the transmitter/receiver (7) and **in that** the persona editor (11) is designed to position itself on a first set of viewing parameters relating to a persona representative of a context associated with the said event.

8. Mobile telecommunication apparatus according to one of Claims 5 to 7, **characterized in that** it comprises in memory, a voice synthesis system (13) controlled by the persona editor (11) so as to transmit on the loudspeaker (3), a voice announcement which indicates the persona or the portion of persona to which the set or respectively the subset on which the persona editor positions itself relates.

9. Mobile telecommunication apparatus according to one of Claims 5 to 7, **characterized in that** it comprises in memory, a voice recognition system (14) designed to position the persona editor (11) on the set or the subset which relates to the persona or respectively the portion of persona which corresponds to a call of name received from the microphone (4) by the said voice recognition system (14).

## Patentansprüche

1. Mobiles Telekommunikationsgerät (1), das ein Mikrofon (4), einen lautsprecher (3), einen Sender/Empfänger (7), eine Steuerschaltung (8) mit einem Speicher (9) und eine Steuerschnittstelle, (5, 6) mit einer Anzeige (2) aufweist, **dadurch gekennzeichnet, dass** es im Speicher aufweist:
- eine Personensammlung (10), die graphische Daten enthält, um eine anthropomorphe Personenstruktur zu beschreiben,
- einen Personeneditor (11), der eingerichtet ist, um im Lese/Schreibbetrieb auf die Parameter der Personensammlung zuzugreifen und um auf einen von der Steuerschnittstelle (5, 6) empfangenen Befehl von einer ersten Einheit von Sichtbarmachungsparametern, die eine erste Person betreffen, zu einer zweiten Einheit von Sichtbarmachungsparametern überzugehen, die eine zweite Person betreffen;
- ein Betriebssystem (12), das eingerichtet ist, um beim Start durch die Steuerschaltung (8) ausgeführt zu werden, um den Personeneditor (11) so zu steuern, dass er, eine so genannte Hauptperson auf der Anzeigte (2) sichtbar macht.

2. Mobiles Telekommunikationsgerät nach Anspruch 1, **dadurch gekennzeichnet, dass** das Betriebssystem (12) eingerichtet ist, um vom Personeneditor (11), die Steuerparameter zu empfanden, die geeignet sind, um den Lautsprecher (3), den Sendor/Empfänger (7) und/oder die Anzeige (2) zu steuern.

3. Mobiles Telekommunikationsgerät nach einem der vorhergehenden Ansprüche, **dadurch gekennzeichnet, dass** mindestens ein erster Sichtbarmachungsparameter eine Leuchtdichte- oder Farbzustand eines Personenbereichs betrifft, mindestens ein zweiter Sichtbarmachungsparameter eine Form des gleichen Personenbereichs betrifft, mit einem vom Personeneditor je nach dem durch den ersten Sichtbarmachungsparameter betroffenen Zustand veränderbarem Werft.

4. Mobiles Telekommunikationsgerät nach Anspruch 3, **dadurch gekennzeichnet, dass** mindestens ein erster Steuerparameter einen Wert abhängig vom. Wert des zweiten Sichtbarmachungsparameters hat.

5. Mobiles Telekommunikationsgerät nach Anspruch 3, **dadurch gekennzeichnet, dass** der Personeneditor (11) eingerichtet ist, um auf einen von der Steuerschnittstelle (5, 6) empfangenen Befehl von einer ersten Untereinheit von Sichtbarmachungsparametern, die einen ersten Personenbereich betreffen, zu einer zweiten Untereinheit von Sichtbarmachungsparametern überzugehen, die einen zweiten Personenbereich betreffen.

6. Mobiles Telekommunikationsgerät nach Anspruch 1, **dadurch gekennzeichnet, dass** der Personeneditor (11) eingerichtet ist, um bei Ablauf einer Verzögerung, die von einem von der Steuerschnittstelle (5, 6) empfangenen Befehl eingeschaltet wird, von einer ersten Einheit von Sichtbarmachungsparametern, die eine erste andere Person als die Hauptperson betreffen, zu einer zweiten Einheit von Sichtbarmachungsparametern überzugehen, die die Hauptperson betroffen.

7. Mobile Telekommunikationsgerät nach Anspruch 1 oder 2, **dadurch gekennzeichnet, dass** das Betriebssystem (12) eingerichtet ist, um an den Personeneditor ein vom Sender/Empfänger (7) empfangenes Ereignis zu übertragen, und dass der Personeneditor (11) eingerichtet ist, um sich auf einer ersten Einheit von Sichtbarmachungsparametern zu positionieren, die eine Person betreffen, die für einen mit dem Ereignis verbundenen Kontext repräsentativ ist.

8. Mobiles Telekommunikationagerät nach einem der Ansprüche 5 bis 7, **dadurch gekennzeichnet, dass** es im Speicher ein Sprachaynthesesystem (13) aufweist, das vom Personeneditor (11) gesteuert wird, um am Lautsprecher (3) eine Sprachansage auszugeben, die die Person oder den Personenbereich anzeigt, der von der Einheit bzw. der Untereinheit betroffen ist, auf der sich der Personeneditor positioniert.

9. Mobiles Telekommunikationsgerät nach einem der Ansprüche 5 bis 7, **dadurch gekennzeichnet, dass** es im Speicher ein Spracherkennungssystem (14) hat, das eingerichtet ist, um den Personeneditor (11) auf der Einheit oder der Untereinheit zu positionieren, die die Person bzw. den Personenbereich betrifft, der einem Namensanruf entspricht, der vom Spracherkennungssytem (14) vom Mikrofon (4) empfangen wird.
